# EUROPÄISCHE PATENTSCHRIFT

(11) **EP 2 397 709 B1**
(45) Veröffentlichungstag und Bekanntmachung des Hinweises auf die Patenterteilung: **10.09.2014**
(21) Anmeldenummer: 11004718.0
(22) Anmeldetag: 09.06.2011
(51) Int. Cl.: F16C 11/06, F16C 33/16

(54) **Kugelgelenk sowie Verfahren zur Montage eines Kugelgelenks**
Ball joint and method for mounting same
Articulation à billes et procédé de montage d'une articulation à billes

(30) Priorität: 18.06.2010 DE 102010024351
(43) Veröffentlichungstag der Anmeldung: 21.12.2011
(73) Patentinhaber: Invenio GmbH Engineering Services, 65428 Rüsselsheim (DE)
(72) Erfinder: Zeimetz, Leo, 64572 Büttelborn (DE); Raschke, Ronny, 55299 Nackenheim (DE)
(74) Vertreter: Herden, Andreas F.

(56) Entgegenhaltungen:
- EP-A1- 0 999 386
- WO-A1-2005/026563
- DE-U1-202008 006 915
- GB-A- 2 082 246
- US-A- 3 535 005
- US-A- 4 231 673

## Beschreibung

### Gebiet der Erfindung

Die Erfindung betrifft ein Kugelgelenk sowie ein Verfahren zu dessen Montage nach dem Oberbegriff des Anspruchs 1 der vorliegenden Erfindung, vgl. US 3 535 005 A. Insbesondere betrifft die Erfindung ein Kugelgelenk, welches bei Zugstangen verwendet wird, wie sie insbesondere im Kraftfahrzeugbereich Verwendung finden.

### Hintergrund der Erfindung

Kugelgelenke sind bekannt. Es handelt sich dabei um Gelenke, bei denen eine Kugel drehbar in einer Lagerpfanne angeordnet ist. Derartige Kugelgelenke ermöglichen eine freie Bewegung in beliebiger Raumrichtung.

Im Kraftfahrzeugbereich finden Kugelgelenke insbesondere bei Zug- beziehungsweise Druckstangen Verwendung. Eine Zugstange umfasst üblicherweise zwei Kugelgelenke, welche an den Enden der Stange angeordnet sind. Zugstangen werden beispielsweise zur Kopplung von Fahrwerksteilen aber auch an vielen anderen Stellen verwendet, bei denen ein erstes Bauteil über die Zugstange ein weiteres Bauteil betätigt.

So sind beispielsweise auch Stellmotoren häufig über eine Zugstange mit dem zu bewegenden Bauteil verbunden. Insbesondere kann beispielsweise die in einem Abgasrückführungssystem verwendete Drosselklappe über eine Zugstange mit einem Stellmotor verbunden sein.

Die Anforderungen an Kugelgelenke in der Fahrzeugtechnik hinsichtlich ihrer mechanischen, aber in vielen Einbauorten auch hinsichtlich ihrer thermischen Belastbarkeit sind hoch.

Im Fahrzeugbereich können die Gelenke hohen Zug- und Druckbeanspruchungen, Vibrationen und/oder einer hohen Anzahl von Lastwechseln und dies bei unterschiedlichster Temperatur und Umweltbedingungen wie Feuchtigkeit, Salz etc. unterliegen. Die gilt insbesondere dann, wenn die Zugstange im Abgasbereich eines Fahrzeugs eingebaut ist.

Herkömmliche Zugstangen bestehen in der Regel aus einer Metallkalotte, einem Innenteil mit sphärischen Flächen beispielsweise aus Edelstahl, welche in einem Polymermaterial, beispielsweise PTFE, gelagert ist.

Es hat sich in der Praxis gezeigt, dass die Dauerhaltbarkeit von Zugstangengelenken häufig nicht gegeben ist. Der Austausch einer Zugstange kann erheblichen Aufwand verursachen, insbesondere wenn diese an schwer zugänglichen Stellen eines Fahrzeugs, wie beispielsweise im Abgasstrang verbaut ist.

### Aufgabe der Erfindung

Der Erfindung liegt dem gegenüber die Aufgabe zugrunde, ein Kugelgelenk, insbesondere ausgebildet für eine Zugstange, mit verbesserter Beständigkeit gegenüber mechanischen und/oder thermischen Belastungen bereitzustellen.

### Zusammenfassung der Erfindung

Die Aufgabe der Erfindung wird bereits durch ein Kugelgelenk sowie durch ein Verfahren zur Montage eines Kugelgelenks nach einem der unabhängigen Ansprüche 1 und 9 gelöst.

Bevorzugte Ausführungsformen und Weiterbildungen der Erfindung sind dem Gegenstand der jeweiligen Unteransprüche zu entnehmen.

Die Erfindung betrifft ein Kugelgelenk, welches insbesondere für eine Zugstange ausgebildet ist.

Insbesondere umfasst die Zugstange das Gelenkgehäuse des Kugelgelenks. Der Begriff der Zugstange wird im Sinne der Erfindung für Bauteile verwendet, welche auch als Druck- oder Koppelstangen bezeichnet werden.

Das Kugelgelenk umfasst eine Kalotte, die zwischen zwei Lagerpfannen gelagert ist. Üblicherweise ist die Kalotte mit einem Bolzen, insbesondere einem Gewindebolzen verbunden, mit dem das Kugelgelenk, beziehungsweise die mit dem Kugelgelenk ausgestattete Zugstange, an einem Bauteil befestigt wird. Die Kalotte ist zwischen den beiden Lagerpfannen derart gelagert, dass eine Bewegung in einer beliebigen Raumrichtung möglich ist.

Gemäß der Erfindung besteht zumindest eine der Lagerpfannen aus Grafit.

Die Erfinder haben herausgefunden, dass sich mit dem Material Grafit sowohl eine hohe thermische als auch eine hohe mechanische Beständigkeit bereitstellen lässt.

Insbesondere wird hierzu die Materialpaarung Grafit/Stahl oder Grafit/Keramik verwendet, also es umfasst entweder die Kalotte Keramik oder Stahl, wohingegen die Lagerpfannen aus Grafit bestehen.

Bei einer bevorzugten Ausführungsform der Erfindung wird eine Stahlkalotte in Verbindung mit Grafitlagerpfannen verwendet.

Vorzugsweise wird ein gehärteter Stahl mit hoher Oberflächengüte, insbesondere mit einer Rauhigkeit Rₐ im Gleitbereich von weniger als Rₐ0,05, verwendet. Die Rockwellhärte der Kalotte beträgt vorzugsweise mehr als 40 HRC, besonders bevorzugt mehr als 50 HRC.

Bei einer bevorzugten Ausführungsform der Erfindung wird die gehärtete Kalotte mit einem Hartstoff beschichtet, beispielsweise einem Nitrid, insbesondere Chromnitrid. Insbesondere wird einen zwischen 2 und 20 µm dicke Schicht aufgebracht.

Die Oberflächen-Mikrohärte beträgt vorzugsweise zumindest HV(0,05)=1500.

Es lässt sich so ein Lager mit einer Temperaturbeständigkeit bis 350°C, ggf. sogar 500 °C, und einer möglichen Zugbeanspruchung von bis 150 N, ggf. auch deutlich mehr, bereitstellen. Das Lager weist eine hohe Dauerfestigkeit auf, insbesondere konnten mit dem Lager zehn Millionen Lastwechsel und mehr am Bewegungsprüfstand bei einer Testfrequenz von 5 Hz absolviert werden.

Auch nach Ende des entsprechenden Belastungstests betrug das gemessene Lagerspiel weniger als 0,2 mm (sowohl axial als auch radial).

Als Grafit wird vorzugsweise ein Material verwendet, welches zumindest eine der folgenden Eigenschaften aufweist:
- Rohdichte 1,8 - 2,5 g/cm³
- Porosität von weniger als 10, vorzugsweise weniger als 5%
- Biegefestigkeit > 50, vorzugsweise > 65 MPa
- Druckfestigkeit > 130, vorzugsweise 150 MPa
- E-Modul (dynamisch) 12 bis 18 GPa
- Härte Rockwell HR 5/100 > 100

Für eine Stahlkalotte wird vorzugsweise ein hochlegierter Edelstahl verwendet, insbesondere mit einem Chromanteil von mindestens 10 %. Beispielsweise kann der Werkstoff X46Cr13 verwendet werden.

Als Alternative kann Keramik beispielsweise mit mindestens einer der folgenden Eigenschaften verwendet werden:
- Rohdichte 4 - 7 g/cm³
- Porosität unter 3 %
- Biegefestigkeit > 300, vorzugsweise > 800 MPa
- E-Modul (dynamisch) 150 bis 250 GPa

Bei der Erfindung ist zumindest eine der Lagerpfannen in ein Gelenkgehäuse eingeschrumpft. Insbesondere sitzt zumindest eine oder beide Lagerpfannen unter Vorspannung in einem Gelenkgehäuse. Sofern zumindest ein Lagerpfanne unter Vorspannung in dem Gelenkgehäuse sitzt, werden Druckspannungen hervorgerufen, die die Empfindlichkeit des Grafits gegenüber mechanischen Belastungen reduzieren. Des Weiteren folgt eine eingeschrumpfte Grafitlagerpfanne, welche einen geringeren thermischen Ausdehnungskoeffizienten als ein Gelenkgehäuse aus Metall aufweist, dennoch dem sich bei Erwärmung vergrößernden Innendurchmesser des Gelenkgehäuses.

Bei einer alternativen Ausführungsform der Erfindung ist die andere Lagerpfanne axial verschiebbar in einem Gelenkgehäuse angeordnet und wird über ein Federelement gegen die Kalotte gedrückt. Als Federelement wird hierzu vorzugsweise ein gewellter Sicherungsring verwendet.

Das Federelement hat gegenüber einem Einschrumpfen den Vorteil, dass durch das Federelement das Lagerspiel über einen größeren Verschleißgrad hinweg auf das geforderte Mindestmaß oder Null reduziert werden kann.

Unter Vorspannung in einem Gelenkgehäuse sitzende Lagerpfannen ermöglichen eine einfachere Ausgestaltung des Lagers mit weniger Bauteilen und geben in der Regel auch bei höheren Kräften weniger nach als ein Federelement.

Bei einer Weiterbildung der Erfindung wird ein Kugelgelenkgehäuse verwendet, dessen thermischer Ausdehnungskoeffizient α sich von dem thermischen Ausdehnungskoeffizienten der Kalotte weniger als 7, bevorzugt weniger als 3, besonders bevorzugt weniger als 2 * 10⁻⁶/K unterscheidet. Gegebenenfalls können gleiche Materialien mit demzufolge gleichem Ausdehnungskoeffizienten verwendet werden.

Bei Erwärmung des Kugelgelenks folgt so die Kalotte im Wesentlichen der Ausdehnung des Gehäuses. Es ist insbesondere vorgesehen, Materialien zu verwenden, deren thermische Ausdehnungskoeffizienten zwischen 8 und 20 * 10⁻⁶/K betragen. Es kann für das Gehäuse ein Spezialstahl verwendet, welcher einen für Stahl verhältnismäßig geringen thermischen Ausdehnungskoeffizienten von weniger als 13 * 10⁻⁶/K aufweist.

In Kombination mit zumindest einer eingeschrumpften Grafitpfanne wird hierdurch erreicht, dass die Grafitpfanne, welche insbesondere ringförmig ausgebildet ist, aufgrund der Vorspannung der Ausdehnung des Gelenkgehäuses folgt. Gleichzeitig dehnt sich die Kalotte, welche von den Gelenkpfannen umschlossen ist, innerhalb des so bereitgestellten Hohlraums aus. Es kann so ein Lager bereitgestellt werden, welches im gesamten Einsatzbereich, der insbesondere bis 350°C reicht, ein geringes Lagerspiel, insbesondere ein Lagerspiel von weniger als 0,2 mm, vorzugsweise weniger als 0,1 mm, aufweist.

Die Erfindung betrifft des Weiteren ein Verfahren zur Montage eines Kugelgelenks, insbesondere eines Kugelgelenks wie vorstehend beschrieben.

Dabei wird eine Kalotte zwischen zwei Lagerpfannen eingesetzt, wobei zumindest eine Lagerpfanne eingeschrumpft wird, z.B. indem zumindest das Gelenkgehäuse erhitzt wird, insbesondere auf eine Temperatur von über 500°C.

Gemäß der Erfindung wird eine Lagerpfanne verwendet, deren Kontaktfläche zur Kalotte vor dem Einschrumpfen eine von der zugeordneten Oberfläche der Kalotte abweichende Form aufweist.

Die Kalotte ist zumindest an den Kontaktflächen sphärisch ausgebildet. Die Lagerpfanne hingegen weist im nicht eingesetzten Zustand eine von dieser sphärischen Form abweichende Form auf, insbesondere die Form eines Torusabschnitts.

Beim Abkühlen des Gelenkgehäuses wird die Lagerpfanne, insbesondere auch aufgrund des höheren thermischen Ausdehnungskoeffizienten des Lagergehäuses, derart zusammengedrückt, dass sich die Form der Kontaktfläche der Lagerpfanne derart ändert, dass sie der Form der Kalotte im Wesentlichen angepasst ist, insbesondere ebenfalls eine sphärische Form mit etwa demselben Radius wie die Kalotte annimmt .

Durch das Montageverfahren kann ebenfalls das Lagerspiel des Kugelgelenks weiter reduziert werden.

Insbesondere lässt sich ein Kugelgelenk bereitstellen, das ein Lagerspiel von weniger als 0,2 mm, vorzugsweise von weniger als 0,1 mm aufweist, wobei das Lagerspiel bei einer Temperaturerhöhung von Raumtemperatur auf 350°C um weniger als 0,05 mm zunimmt .

Das Übermaß zwischen Lagerpfanne und Gelenkgehäuse beträgt bei Raumtemperatur vorzugsweise zwischen 0,05 und 0,12 mm. Die maximal auftretenden Spannungen betragen in der vorzugsweise aus Grafit ausgebildeten Kugelpfanne vorzugsweise weniger als 150, besonders bevorzugt weniger als 100 N/mm². Im Gelenkgehäuse beträgt die maximale Spannung weniger als 200, vorzugsweise weniger als 140 N/mm²_{.}

Bei einer Ausführungsform, die für eine Einsatztemperatur bis 350°C ausgebildet ist, liegt bei dieser Temperatur eine Mindestüberdeckung von 5, vorzugsweise 10 µm zwischen den Lagerpfannen und dem Gelenkgehäuse vor. So wird auch bei maximaler Einsatztemperatur ein geringes Lagerspiel und ein sicherer Halt der Gelenkpfanne erreicht.

Die Erfindung betrifft des Weiteren eine Zugstange, welche mit zumindest einem, vorzugsweise zwei vorstehend beschriebenen Kugelgelenken versehen ist.

Bei einer Weiterbildung der Erfindung weisen die Bohrungen in den beiden Kalotten, welche der Aufnahme eines Bolzens, insbesondere eines Gewindebolzens dienen, einen voneinander abweichenden Durchmesser auf. Hierdurch wird verhindert, dass die Zugstange in verschiedenen Positionen eingebaut werden kann. Der Zugstange kann somit eine Heiß- und eine Kaltseite zugeordnet werden, wobei es auf der Kaltseite nicht notwendig ist, ein vorstehend beschriebenes Kugelgelenk zu verwenden. Vielmehr kann auf der Kaltseite aufgrund der geringeren thermischen Belastungen ein Kugelgelenk mit einer anderen Materialpaarung, insbesondere Edelstahl/Polymer, verwendet werden.

Bei den erfindungsgemäßen Kugelgelenken wird vorzugsweise auf die Verwendung von Öl oder Fett verzichtet. Dies kann von Vorteil sein, da aufgrund Hitzeeinwirkung eintretende Veränderungen des Schmiermittels zu einem erhöhten Verschleiß führen können. Des Weiteren ist das Lager wartungsfrei.

Sämtliche Komponenten des Kugelgelenks sind vorzugsweise aus nicht korrosiven Werkstoffen ausgebildet, welche insbesondere auch gegenüber Salzwasser und korrosiven Partikeln beständig sind.

Die mit einem erfindungsgemäßen Kugelgelenk versehene Zugstange ist insbesondere für eine Verwendung in der Abgasrückführung eines Kraftfahrzeuges vorgesehen.

### Kurzbeschreibung der Zeichnungen

Die Erfindung soll im Folgenden Bezug nehmend auf die Zeichnungen Fig. 1 bis Fig. 4, welche ein schematisch dargestellte Ausführungsbeispiele der Erfindung zeigen, näher erläutert werden.
Fig. 1 zeigt schematisch ein Kugelgelenk in Explosionsdarstellung.
Fig. 2 zeigt eine schematische Schnittansicht durch ein Kugelgelenk.
Fig. 3 zeigt schematisch eine Zugstange, welche zumindest ein erfindungsgemäßes Kugelgelenk umfasst.
Fig. 4 zeigt schematisch eine Schnittansicht einer alternativen Ausführungsform eines Kugelgelenks.

### Detaillierte Beschreibung der Zeichnungen

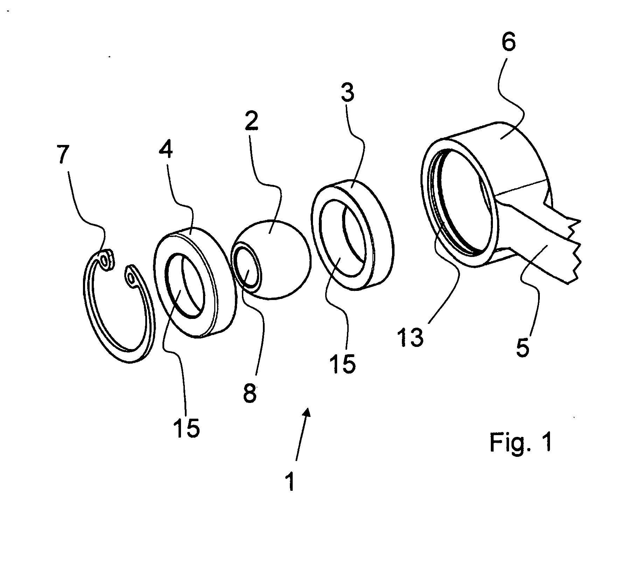

Bezug nehmend auf Fig. 1 sollen die wesentlichen Bestandteile eines Ausführungsbeispiels eines Kugelgelenks näher erläutert werden.

Fig. 1 zeigt eine Explosionsdarstellung im demontierten Zustand.

Das Kugelgelenk 1 umfasst ein Gelenkgehäuse 6, welches in diesem Ausführungsbeispiel einstückig mit einer Zugstange 5, die hier nur teilweise dargestellt ist, ausgebildet ist.

Weiter umfasst das Kugelgelenk 1 eine sphärisch ausgebildete Kalotte 2, welche zwischen zwei Lagerpfannen 3 und 4 gelagert wird. Die Lagerpfannen 3, 4 sind ringförmig ausgebildet und somit mittig offen. So können die Lagerpfannen 3, 4 Änderungen des Innendurchmessers des Gelenkgehäuses 6, welche aufgrund von Temperaturschwankungen auftreten, besser folgen.

Um an einem zu betätigendem Bauteil wie beispielsweise einem Stellhebel oder einem Stellmotor befestigt zu werden, umfasst die Kalotte 2 eine Bohrung 8, die beispielsweise der Aufnahme eines Gewindebolzens (nicht dargestellt) dient. Es versteht sich, dass die Bohrung 8 nicht zwingend mittels eines Bohrers in die aus Keramik ausgebildete Kalotte 2 eingebracht sein muss, sondern dass der Begriff Bohrung nur geometrisch zu verstehen ist. Es ist denkbar, in die Bohrung 8 noch eine Hülse zur Verstärkung einzusetzen (nicht dargestellt).

Bei der Montage des Kugelgelenks 1 werden in diesem Ausführungsbeispiel sowohl die Lagerpfanne 3 als auch die Lagerpfanne 4 in das Gelenkgehäuse 6 eingeschrumpft. Hierzu wird das Gelenkgehäuse 6, welches aus Metall besteht, auf eine Temperatur von über 500°C erwärmt und sodann werden die Lagerpfannen 3 und 4 sowie die Kalotte 2 eingesetzt. Die Lagerpfannen 3 und 4 weisen bei Einsetztemperatur von über 500 °C eine Spielpassung auf und sind nach Abkühlen des Lagergehäuses 6 aufgrund des sich mit Abkühlung verringernden Innendurchmessers durch eine Presspassung fixiert.

Im zusammengebauten Zustand liegt die Lagerpfanne 3 an einem Steg (nicht zu sehen) des Gelenkgehäuses an. Angrenzend an die Lagerpfanne 4 ist ein Sicherungsring 7 angeordnet, welcher in eine Nut 13 des Gelenkgehäuses 6 eingesetzt wird. Auf diesen Sicherungsring kann gegebenenfalls auch verzichtet werden. In dieser Ausführungsform wird durch den Sicherungsring 7 verhindert, dass die Lagerpfanne 4 bei hoher Temperatur und gleichzeitig hoher axialer Kraft aus dem Gelenkgehäuse 6 fallen kann.

Bei einer alternativen Ausführungsform der Erfindung (nicht dargestellt) wird dagegen nur die Lagerpfanne 3 eingeschrumpft, wohingegen die Lagerpfanne 4 mit einer Spielpassung (bei Einsatztemperatur) in das Gelenkgehäuse eingesetzt ist und über einen gewellten Ring aus federndem Material, insbesondere einem doppelt welligen Sicherungsring, gegen die Kalotte gedrückt wird.

In der hier dargestellten Ausführungsform ist besonders von Vorteil, dass die Gelenkpfannen 3, 4 aufgrund der durch das Einschrumpfen vorhandenen Vorspannung dem größer werdenden Durchmesser des Gelenkgehäuses 5 folgen.

Der thermische Ausdehnungskoeffizient des Gelenkgehäuses 6 ist auf den thermischen Ausdehnungskoeffizienten der Kalotte 2 derart abgestimmt, dass sich beim Ausdehnen des Lagers auch die Kalotte in dem zwischen den Lagerpfannen 3, 4 gebildeten Hohlraum derart ausdehnt, dass ein stark ansteigendes Lagerspiel verhindert wird.

Die Lagerpfannen 3, 4 weisen im nicht eingebauten Zustand eine von der sphärischen Form der Kalotte 2 abweichende Geometrie der Kontaktflächen 15 auf. Erst durch das Einschrumpfen ändert sich durch das Zusammendrücken der Lagerpfannen 3, 4 die Geometrie der Kontaktflächen 15 derart, dass diese im Wesentlichen der sphärischen Kontur der Kalotte folgt.

So kann ein Kugelgelenk bereit gestellt werden, welches bei einer Einsatztemperatur von -20 bis 350°C ein Lagerspiel von unter 0,2 mm aufweist (sowohl axial als auch radial).

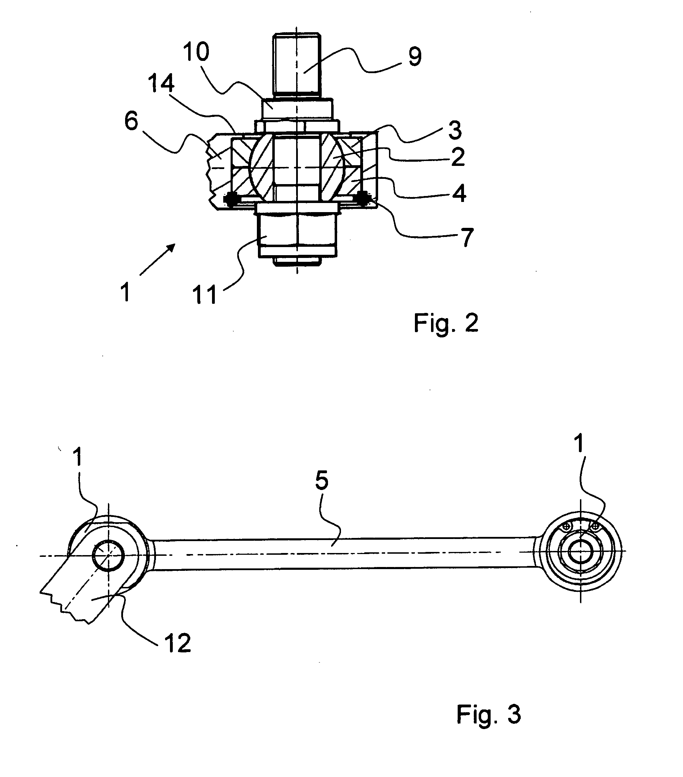

Fig. 2 zeigt eine schematische Schnittansicht des in Fig. 1 dargestellten Kugelgelenks im zusammengebauten Zustand.

Zu erkennen ist das Gelenkgehäuse 6, in welchem eine hier obere Lagerschale 3 an einer Gehäusewand 14 anliegt.

Die hier untere Lagerschale 4 wird durch den Sicherungsring 7 gegen Herausrutschen gesichert. Der Sicherungsring 7 ist aber nicht unbedingt erforderlich.

Zur Befestigung beispielsweise an einem Stellmotor oder einem Betätigungshebel (nicht dargestellt) ist an der Kalotte ein Gelenkbolzen 9 mit den Muttern 10 und 11 befestigt. Die Kalotte 2 ist in den Lagerschalen 3, 4 in allen Richtungen drehbar beweglich.

Fig. 3 zeigt eine Zugstange 5 mit zwei Pfannenlagern 1, von denen zumindest eines die Materialpaarung Grafit/Keramik umfasst. In diesem Ausführungsbeispiel ist die Zugstange auf der rechten Seite mit einem Stellmotor (nicht dargestellt) und auf der linken Seite mit einem Hebel 12 verbunden, welcher der Betätigung einer Stellklappe in einem Abgasrückführungssystem dient.

Insbesondere bei dieser Verwendung ist die Geeignetheit der erfindungsgemäßen Kugelgelenke für Hochtemperatureinsätze, deren geringes Lagerspiel sowie deren geringer Verschleiß von großem Vorteil. Durch das auch nach langer Einsatzzeit immer noch geringe Lagerspiel kann eine exakte Regelung der Drosselklappe des Abgasrückführungssystems sichergestellt werden. Das Lager ist wartungsfrei, korrosionsbeständig und reibarm.

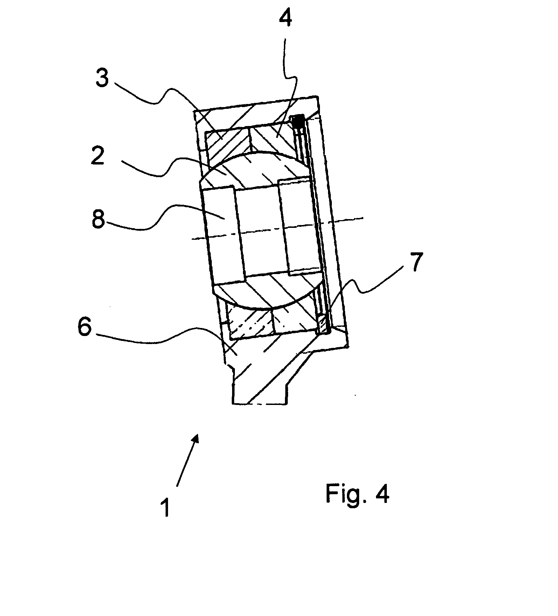

Fig. 4 zeigt eine Schnittansicht eines Kugelgelenks 1 gemäß einer alternativen Ausführungsform der Erfindung. Auch bei diesem Kugelgelenk 1 sind in das Gelenkgehäuse 6 zwei Lagerpfannen 4 aus Grafit eingeschrumpft.

Die Lagerpfanne 4 ist mit einem Sicherungsring 7 gesichert. Die Kalotte 2 ist in diesem Ausführungsbeispiel etwas größer und besteht aus einem hochlegierten Stahl, insbesondere aus X46Cr13.

Die Stahlkalotte ist auf 54HRC gehärtet und hat im Gleitbereich zum Grafit eine Oberflächengüte, besser als Rₐ 0,05. Weiter ist die Kalotte mit Chromnitrid beschichtet (3 Mikrometer) und hat eine Oberflächenmikrohärte HV (0,05=1750).

Die Bohrung 8 ist in diesem Ausführungsbeispiel beidseitig abgesetzt, weist also in der Mitte einen geringeren Durchmesser auf als außen. So können Muttern zur Befestigung (nicht dargestellt) teilweise in der Kalotte 2, verzinkt werden.

### Bezugszeichenliste

- 1.: Kugelgelenk
- 2.: Kalotte
- 3.: Lagerpfanne
- 4.: Lagerpfanne
- 5.: Zugstange
- 6.: Gelenkgehäuse
- 7.: Sicherungsring
- 8.: Bohrung
- 9.: Gewindebolzen
- 10.: Mutter
- 11.: Mutter
- 12.: Stellhebel
- 13.: Nut
- 14.: Gehäusewand
- 15.: Kontaktfläche

## Patentansprüche

1. Kugelgelenk (1), insbesondere ausgebildet für eine Zugstange (5), umfassend eine Kalotte (2), die zwischen zwei Lagerpfannen (3,4) gelagert ist,
wobei zumindest eine der Lagerpfannen aus Grafit besteht, **dadurch gekennzeichnet, daß** die zumindest eine Lagerpfanne in ein Gelenkgehäuse (6) eingeschrumpft ist.

2. Kugelgelenk nach dem vorstehenden Anspruch, **dadurch gekennzeichnet, dass** die Kalotte und Lagerpfannen die Materialpaarung Grafit und Stahl oder Keramik umfassen.

3. Kugelgelenk nach dem vorstehenden Anspruch, **dadurch gekennzeichnet, dass** die Kalotte aus Stahl oder Keramik besteht.

4. Kugelgelenk nach einem der vorstehenden Ansprüche, **dadurch gekennzeichnet, dass** die Lagerpfannen unter Vorspannung in einem Gelenkgehäuse sitzen.

5. Kugelgelenk nach einem der Ansprüche 1 bis 3, **dadurch gekennzeichnet, dass** zumindest eine Lagerpfanne axial verschiebbar in einem Gelenkgehäuse angeordnet ist und über ein Federelement gegen die Kalotte gedrückt wird.

6. Kugelgelenk nach dem vorstehenden Anspruch, **dadurch gekennzeichnet, dass** das Federelement als gewellter Sicherungsring (7) ausgebildet ist.

7. Kugelgelenk nach einem der vorstehenden Ansprüche, **dadurch gekennzeichnet, dass** die Kalotte aus gehärtetem Stahl besteht, der mit einer Schicht aus einem Hartstoff beschichtet ist.

8. Kugelgelenk nach einem der vorstehenden Ansprüche, **dadurch gekennzeichnet, dass** sich der thermische Ausdehnungskoeffizient α der Kalotte von dem thermischen Ausdehnungskoeffizienten eines Gelenkgehäuses weniger als 7, bevorzugt weniger als 3, besonders bevorzugt weniger als 2 * 10⁻⁶/K unterscheidet.

9. Verfahren zur Montage eine Kugelgelenks (1), insbesondere eines Kugelgelenks nach einem der vorstehenden Ansprüche, wobei eine Kalotte (2) zwischen zwei Lagerschalen (3,4) eingesetzt wird, **dadurch gekennzeichnet, dass** zumindest eine Lagerpfanne aus Grafit in ein Gelenkgehäuse (6) eingeschrumpft wird, deren Kontaktfläche (15) vor dem Einschrumpfen eine von der zugeordneten Oberfläche der Kalotte abweichende Form aufweist, wobei sich die Form der Kontaktfläche der Lagerpfanne beim Einschrumpfen derart ändert, dass sie der Form der Kalotte angepasst wird.

## Claims

1. Ball joint (1), in particular designed for a tie rod (5), comprising a ball (2) which is mounted between two bearing cups (3, 4),
wherein at least one of the bearing cups consists of graphite, **characterised in that** the at least one bearing cup is shrunk into a joint housing (6).

2. Ball joint as claimed in the preceding claim, **characterised in that** the ball and bearing cups comprise the material pairing of graphite and steel or ceramic.

3. Ball joint as claimed in the preceding claim, **characterised in that** the ball consists of steel or ceramic.

4. Ball joint as claimed in any one of the preceding claims, **characterised in that** the bearing cups are located in a joint housing under pretensioning.

5. Ball joint as claimed in any one of claims 1 to 3, **characterised in that** at least one bearing cup is disposed in an axially displaceable manner in a joint housing and is pressed against the ball by means of a spring element.

6. Ball joint as claimed in the preceding claim, **characterised in that** the spring element is designed as a curved securing ring (7).

7. Ball joint as claimed in any one of the preceding claims, **characterised in that** the ball consists of hardened steel which is coated with a layer of hard material.

8. Ball joint as claimed in any one of the preceding claims, **characterised in that** the thermal coefficient of expansion α of the ball differs from the thermal coefficient of expansion of a joint housing by less than 7, preferably less than 3, in particular preferably less than 2 * 10⁻⁶/K.

9. Method for mounting a ball joint (1), in particular a ball joint as claimed in any one of the preceding claims, wherein a ball (2) is inserted between two bearing cups (3, 4), **characterised in that** at least one bearing cup made from graphite is shrunk into a joint housing (6), the contact surface (15) of which cup, before shrinkage, is of a shape which deviates from the associated surface of the ball, wherein the shape of the contact surface of the bearing cup changes during shrinkage such that it is adapted to the shape of the cup.

## Revendications

1. Articulation à rotule (1), prévue en particulier pour une barre de traction (5), comprenant une calotte (2) montée entre deux coussinets (3, 4),
au moins un des coussinets étant en graphite, **caractérisée en ce que** l'au moins un coussinet est serré dans un carter d'articulation (6).

2. Articulation à rotule selon la revendication précédente, **caractérisée en ce que** la calotte et les coussinets contiennent la combinaison de matériaux graphite et acier ou céramique.

3. Articulation à rotule selon la revendication précédente, **caractérisée en ce que** la calotte est en acier ou en céramique.

4. Articulation à rotule selon l'une des revendications précédentes, **caractérisée en ce que** les coussinets siègent dans un carter d'articulation par application d'une pré-contrainte.

5. Articulation à rotule selon l'une des revendications 1 à 3, **caractérisée en ce qu'**au moins un coussinet est disposé de manière à être axialement mobile dans un carter d'articulation et est serré contre la calotte par un élément de ressort.

6. Articulation à rotule selon la revendication précédente, **caractérisée en ce que** l'élément de ressort est réalisé comme bague de fixation ondulée (7).

7. Articulation à rotule selon l'une des revendications précédentes, **caractérisée en ce que** la calotte est en acier trempé revêtu d'une couche de matière dure.

8. Articulation à rotule selon l'une des revendications précédentes, **caractérisée en ce que** la différence entre le coefficient de dilatation thermique α de la calotte et le coefficient de dilatation thermique d'un carter d'articulation est inférieure à 7, avantageusement inférieure à 3, préférentiellement inférieure à 2-10⁻⁶/K.

9. Procédé de montage d'une articulation à rotule (1), en particulier d'une articulation à rotule selon l'une des revendications précédentes, où une calotte (2) est mise en place entre deux coquilles de coussinet (3, 4), **caractérisée en ce qu'**au moins un coussinet en graphite, dont la surface de contact (15) présente avant serrage une forme différente de la surface de calotte correspondante, est serré dans un carter d'articulation (6), la forme de la surface de contact du coussinet étant modifiée par le serrage de manière à s'ajuster à la forme de la calotte.
